Europäisches Patentamt

European Patent Office

Office européen des brevets

(11) Publication number: **0 481 923 B1**

# EUROPEAN PATENT SPECIFICATION

(45) Date of publication of patent specification: **24.05.95**    (51) Int. Cl.[6]: **A23P 1/10**, A23L 3/44, A23L 3/42

(21) Application number: **91830240.7**

(22) Date of filing: **04.06.91**

(54) **Process for the preparation of dehydrated compressed foodstuffs starting from freeze-dried and/or dried, vegetal and/or animal origin products.**

(30) Priority: **16.10.90 IT 4837090**

(43) Date of publication of application:
**22.04.92 Bulletin 92/17**

(45) Publication of the grant of the patent:
**24.05.95 Bulletin 95/21**

(84) Designated Contracting States:
**AT BE CH DE DK ES FR GB GR LI LU NL SE**

(56) References cited:
**US-A- 3 385 715**
**US-A- 3 806 610**

**FOOD TECHNOLOGY. vol. 31, no. 4, April 1977,CHICAGO US pages 58 - 64; M.GEE, D.FARKAS, A.R.RAHMAN: 'Some Concepts for theDevelopment of Intermediate Moisture Foods'**

(73) Proprietor: **AGROFIL SOC. COOP. A R.L.**
**Viale Artale Alagona 37**
**I-95126 Catania (IT)**

(72) Inventor: **Costanzo, Luigi**
**Via del Covento del Carmine 12**
**Tremestieri Etneo (CT) (IT)**
Inventor: **Nobili, Sergio**
**Viale Artale Alagona 37**
**Catania (IT)**
Inventor: **Paraventi, Raffaele**
**Via Galileo Galilei 1**
**Perugia (IT)**

(74) Representative: **Iannone, Carlo Luigi et al**
**Ing. Barzanò & Zanardo Roma S.p.A.**
**Via Piemonte, 26**
**I-00187 Roma (IT)**

**Description**

This invention relates to a process for the production of dried compressed foodstuffs from freeze-dried and/or dried vegetal and/or animal origin products.

A number of patents have been filed more or less recently which are concerned with processes for obtaining compressed foodstuffs.

For the most part of them, processes were dealt with by which single products were mainly obtained, in which the starting product having quite a low dampness degree, between 1 and 5 %, was dampened again up to a dampness of a definitely higher value, and hence to such a plasticization of the product that the same could be compressed under quite high pressure values.

The following US patents can be mentioned among such patents: No. 3,385,715 (Ishler et al.), No. 3,806,610 (Rahman), No. 3,882,253 (Schafer), No. 3,950,560 (Rahman) No. 4,096,283 (Rahman) and No. 4,109,026 (Rahman).

The re-dampening of the product was carried out by means of water for each one of them.

After the compression stage, the drying of the final compressed product was necessary in order to reduce the residual dampness down to a value corresponding to a water activity (WA) below an acceptable value for a long term conservation product.

Water activity represents the ratio of water vapor pressure in the substrate under examination to the pure water vapor pressure under the same conditions. The measurement is carried out at 25°C.

Accordingly, such parameter represents a measure of free water in the product, i.e., the amount of water which is available for promoting the microbial development, enzymic activity, and so on.

The present Applicant also filed the Italian Patent No. 1,219,823, wherein a process for the production of compressed foodstuffs is described, said process providing for both the re-dampening stage of the product, as a single product or as a mixture, and the final dehydration stage.

Now it is quite evident that such industrial process, wherein the product undergoing the process is first to be plasticized so that it can undergo compression and then it is to be again taken to final dampness conditions similar to the starting conditions, turns out to be very lengthy and costly.

Indeed, in addition to the many working stages to be provided for, resulting in the production times becoming very long, this process calls for the employment of very costly apparatus, especially as regards the final dehydration stage.

On the other hand, the plasticization stage of the starting product cannot be avoided, if a good result is desired in the compression stage, nor can a final product with too high a dampness cannot be accepted, if a product is desired which can be commercially distributed and which can be stored for a long time.

In that situation, the Applicant has investigated a process for the production of compressed foodstuffs, which process can reconcile both said requirements, i.e. the requirement of having a product of the necessary plasticity features in the compression stage, and the requirement of obtaining, at the end of compression, a product which can be directly packaged without subjecting the same necessarily to a dehydration stage.

These and other results are obtained, according to the present invention, by treating the product with a water-alcohol mixture or by means of alcohol and/or keeping the product itself at a given temperature, so as to realize anyway the plasticization of the product without surpassing the water percentage present that would call for a final dehydration.

Again according to this invention, the suggestion is put forward of inserting a given amount of a powder seasoning into the package of the compressed product, said seasoning, in addition to supplying a complete product, also absorbs any possible excess dampness.

Accordingly, it is a specific object of this invention a process for the production of dehydrated compressed foodstuffs, comprising the steps of:

a) metering the freeze-dried and/or dried, vegetal and/or animal origin products at the doses required for obtaining the desired final product;

b) plasticizing the starting products by means of a water/alcohol solution or by means of just alcohol and/or through heating at a temperature between 20°C and 95°C for 1 second up to 10 minutes, till the desired degree of plasticity is obtained;

b1) adding a thickening, foodstuff-type compound, said compound being dissolved in a water/alcohol solution or just in alcohol, the addition being performed in such an amount that the solution weight represents a percentage between 1% and 6% of the finished product;

c) compressing the product(s) at a pressure between 2 and 100 kg/cm$^2$, at a temperature in the range from 20°C to 95°C and for a time between 1 and 10 seconds; and

2

EP 0 481 923 B1

d) packaging the product so obtained with a high-barrier material;
the final product is to contain in any case a water activity (WA) less then or equal to 0.4-0.5.

According to a particularly preferred embodiment of the process of this invention, if freeze-dried or dried vegetal and/or animal products are employed, the plasticization step b) is carried out only on the freeze-dried products, whereas the dried products are conveyed directly to the step b1) for the addition of the thickening agent together with some freeze-dried products coming from the step b) which as a consequence of their own nature, require the presence of a thickening agent.

During the packaging step d), in the case of mixtures of freeze-dried and/or dried products the seasoning powders are added as such and/or dried, anyway with a water activity less than or equal to 0.3.

The plasticization step b) is carried out preferably through nebulization, employing a water/alcohol mixture in proportions variable between 1 % water-99 % alcohol and 99 % water-1 % alcohol, and in particular with a solution of 20-30 % water/70-80 % alcohol.

As already mentioned above, the step b) can also be carried out completely in alcohol or keeping the products at a certain temperature, preferably at 85°C.

Anyway, the step b) is to be performed under conditions which do not cause water activity in the product to rise beyond the value of 0.5 (value determined at 25°C).

Preferably, according to the present invention, ethyl alcohol will be employed.

In the next step b1), in which, as already mentioned above, a water/alcohol mixture plus a thickening agent or just alcohol plus a thickening agent can be employed, again taking care of not surpassing the water activity value of 0.4-0.5, preferably maltodextrin or a glucose syrup are employed as thickening agents.

In that case, the ratio of the water-alcohol-maltodextrin solution will preferably be of 1-1-1.6.

In that case also, step b1), ethyl alcohol is preferably employed.

The packaging step is carried out preferably employing plastic materials of the composite type, containing a layer of EVOH or of PVDC or of A1.

Some examples of the process according to this invention will be reported in the following just for exemplification and not for limitative purposes.

EXAMPLE I

50 g of freeze-dried green beans having 3 % dampness, are sprayed with 3-4 g of a water/alcohol 1/3 nebulized solution and kept in a closed chamber for ten minutes.

Next the product so treated is sprayed with 2.5 g of a nebulized water-alcohol-maltodextrin solution in the respective proportions of 1 + 1 + 1.6 for 2-10 seconds.

The product is then transferred into a steel cell having a square base of 80 x 80 mm and a height of 200 mm, wherein the product itself is compressed by a piston which is driven by an oleodynamic unit, at a pressure of 10-12 kg/cm$^2$. The product is kept under load for 2-4 seconds from the time of maximum compression. Finally, by setting the cell bottom free, the "compressed" product is taken out of the cup by means of the piston itself.

The "compressed" product is finally packaged with materials having a high oxygen and water vapor barrier, in the form of a triple composite material made up of PET-A1-PE or in the form of a thermoformed co-extruded material of PVC-PVDC-PE. The packaging is performed under a controlled N$_2$ atmosphere.

EXAMPLE II

50 g of freeze-dried spinach having about 4 % dampness are kept at a temperature of 80°C in a closed chamber for 10 minutes.

The product is then transferred into a steel cell having a square base of 80 x 80 mm and a height of 200 mm, wherein the product itself is compressed by a piston which is driven by an oleodynamic unit, at a pressure of 10-12 kg/cm$^2$. The product is kept under load for 2-4 seconds from the time of maximum compression.

Finally, on setting the cell bottom free, the compressed material is extracted from the cell by means of the piston itself.

The compressed material is finally packaged with material having a high oxygen and water vapor barrier, in the form of a triple composite material made up of PET-A1-PE, or of a thermoformed co-extruded material of PVC-PVDC-PE. The packaging operation is carried out under a controlled N$_2$ atmosphere.

3

EXAMPLE III

100 g of dried carrots with about 4 % dampness are sprayed with 4-5 g of a water-alcohol-maltodextrin nebulized solution in the respective proportions of 1-1-1.6 for 2-10 seconds.

The product is then transferred in a steel cell having a square base of 80 x 80 mm and height 200 mm, and is compressed by means of a piston driven by an oleodynamic unit at a pressure od 45-50 kg/cm$^2$. The product is kept under load for 4-6 seconds from the time of maximum compression. Finally, on setting the cell bottom free, the "compressed" product is taken out of the cell by the action of the piston itself.

The "compressed" product is packaged with materials having a high oxygen and water vapor barrier, in the form of a triple composite material made up of PET-A1-PE or of a thermoformed co-extruded material made up of PVC-PVDC-PE. The packaging is carried out under a controlled N$_2$ atmosphere.

EXAMPLE IV

| Freeze-dried beets | | 23.3 g |
|---|---|---|
| potato dice | ) | |
| carrot dice | ) | |
| onion slices | ) | 105.7 g |
| celery dice | ) | |
| precooked beans | ) | |

23.3 g of freeze-dried beets having about 3 % dampness are sprayed with 1.4-1.8 g of a 1/3 water/alcohol nebulized solution and kept in a closed chamber for 10 minutes.

The product so treated is mixed with 105.7 g of dried products respectively in the proportions shown in the formulation and with 4 % max dampness.

The mixture so obtained is contacted with 4.3 g of a 1 + 1 + 1.6 water/alcohol/maltodextrin nebulized solution.

The fresh mixture so prepared is transferred into a steel cell having a square base, 80 x 80 mm, and of 200 mm height, and said mixture is compressed by a piston driven by an oleodynamic unit at a pressure of 35-38 kg/cm$^2$. The product is kept under load for 2-4 seconds from the time of maximum compression. Finally, on setting the bottom cell free, the "compressed" product is taken out of the cell by means of the piston itself.

The fresh mixture is packaged with materials having a high oxigen and water vapor barrier, in the form of a triple composite material made up of PVC-EVOH-PE or of a thermoformed co-extruded material made up of PVC-PVDC-PE. The packaging operation is carried out under a controlled N$_2$ atmosphere.

After this treatment, the product shows a water activity less than or equal to 0.4.

EXAMPLE V

The process is carried out employing the same amounts and the same steps as those employed in the process fo example IV.

Before the packaging step, 204.3 g of a seasoning mixture are added to the compressed material, said seasoning being based on vegetal and/or animal and/or mineral origin powders whose water activities were less than or equal to 0.3.

EXAMPLE VI

95.5 g of dried carrots-onions-celery having 4 % maximum dampness are sprayed in the proportion corresponding to the formulation set forth above with 4.5 g of a nebulized 1 + 1 + 1.6 water-alcohol-maltodextrin solution for 2-10 seconds.

The mixture so prepared is transferred into a steel cell having a square base of 80 x 80 mm and a height of 200 mm, and said mixture is compressed by a piston driven by an oleodynamic unit under a pressure of 45-50 kg/cm$^2$.

The product is kept under load for 8-10 seconds from the time of maximum compression. Finally, on setting the cell bottom free the compressed material is taken out of the cell by the action of the piston itself.

The compressed material is packaged with materials having a high oxygen and water vapor barrier, in the form of a triple composite material made up of PET-A1-PE or of the thermoformed co-extruded material made up of PVC-PVDC-PE. The packaging operation is carried out under a controlled $N_2$ atmosphere.

EXAMPLE VII

The process is carried out as disclosed in example VI, with the only difference that before the packaging step an amount of a seasoning mixture is added to the compressed material, said mixture being based on dried vegetal and/or animal and/or mineral origin products whose amount is about equal to the amount of the starting product, the water activity being less than or equal to 0.3.

EXAMPLE VIII

23 g of freeze-dried green beans and 9 g of freeze-dried peas having 3 % maximum dampness are sprayed with 2.3 g of a nebulized water/alcohol 1 + 3 solution and kept in a closed chamber for 10 minutes.

Next they are mixed with 59 g of dried potatos and with 9 g of dried carrots having 4 % maximum dampness.

The resulting mixture is sprayed with 4 g of a 1 + 1 + 1.6 nebulized water/alcohol/maltodextrin solution.

The mixture so prepared is transferred into a steel cell having a square base of 80 x 80 mm and of 200 mm height, and it is compressed by means of a piston driven by an oleodynamic unit at a pressure of 18-20 kg/cm$^2$.

The product is kept under load for 4-8 seconds from the time of maximum compression.

Finally, by setting the cell bottom free, the compressed material is taken out of the cell by means of the piston itself.

The product is then packaged with materials having a high oxygen and water vapor barrier, in the form of a triple composite material made up of PET-A1-PE or as a thermoformed co-extruded material of PVC-PVDC-PE. The packaging operation is carried out under a controlled $N_2$ atmosphere.

EXAMPLE IX

The process is carried out as disclosed in example VIII, with the only exception that, before the packaging step, an amount of a seasoning mixture is added to the compressed material, said seasoning being based on dried vegetal and/or animal and/or mineral origin products, the amount being about equal to that of the starting product, with a water activity not higher than 0.3.

EXAMPLE X

60 g of a mixture of equal portions of spinach, green beans and cauliflowers is sprayed with 4-5 g of a nebulized 1/3 water/alcohol solution and kept in a closed chamber for ten minutes.

The mixture so obtained is sprayed with 3-4 g of a nebulized 1 + 1 + 1.6 water/alcohol/maltodextrin solution for 2-10 seconds.

The mixture so prepared is transferred into a steel cell having a square base of 80 x 80 mm and of 200 mm height and is then compressed by a piston driven by an oleodynamic unit at a pressure of 10-15 kg/cm$^2$. The product is kept under load for 2-4 seconds from the time of maximum compression. Finally, by setting the cell bottom free, the "compressed" product is taken out of the cell by the action of said piston itself.

The compressed material is packaged with a material having a high oxygen and water vapor barrier, in the form of a triple composite material made up of PVC-EVOH-PE or with a thermoformed co-extruded material made up of PVC-PVDC-PE. The packaging operation is performed under a controlled $N_2$ atmosphere.

EXAMPLE XI

The process is carried as disclosed in example X with the only exception that before the packaging step, an amount of a seasoning mixture is added to the compressed material, said mixture being based on dried vegetal and/or animal and/or mineral origin products, said amount being about equal to the amount of the starting product, with a water activity lower than 0.3.

EXAMPLE XII

80 g of freeze-dried meat dice with about 3 % dampness is sprayed with 6-8 g of a nebulized 1/3 water/alcohol solution and kept in a closed chamber for 10 minutes.

The product so plasticized is sprayed with 3-4 g of a 1 + 1 + 1.6 water/alcohol/maltodextrin solution for 2-10 seconds.

The product so treated is transferred into a steel cell having a square base of 80 x 80 mm and of 200 mm height and is then compressed by a piston driven by an oleodynamic unit at a pressure of 35-40 kg/cm$^2$.

The product is kept under load for 6-8 seconds from the time of maximum compression.

Finally, by setting the cell bottom free, the compressed product is taken out of the cell by the action of the piston itself.

The product is packaged with materials showing a high oxygen and water vapor barrier, in the form of a triple composite material made up of PET-A1-PE or of a thermoformed co-extruded material of PVC-PVDC-PE. The packaging operation is performed under a controlled $N_2$ atmosphere.

This invention has been disclosed just for illustrative purposes according to some preferred embodiments of the same.

## Claims

1. A process for the production of compressed dehydrated foodstuffs starting from freeze-dried and/or dried products from vegetal and/or animal origin, said process comprising the steps of:

   a) metering the freeze-dried and/or dried vegetal and/or animal origin products at the doses required for obtaining the final product desired;

   b) plasticizing the starting products by means of a water/alcohol solution or by means of just alcohol and/or keeping them at a temperature between 20°C and 95°C for a time in the range from 1 second to 10 minutes, till obtaining the desired plasticity;

   b1) adding a foodstuff-type thickening compound, dissolved in a water/alcohol solution or just in alcohol, in such an amount that the weight of the solution represents a weight percentage between 1 and 6% of the finished product;

   c) compressing the product(s) at a pressure between 2 and 100 kg/cm$^2$, at a temperature between 20°C and 95°C for a time between 1 and 10 seconds; and

   d) packaging the product so obtained employing a high-barrier material;

   the final product being required to have a water activity value (WA) less than or equal to 0.4-0.5.

2. A process according to claim 1, characterized in that in the case of freeze-dried and dried products from vegetal and/or animal origin, the plasticizing step b) is carried out only on the freeze-dried products, whereas the dried products are conveyed directly to the step b1) in which the thickening agent is added, during which step they are mixed with some of the freeze-dried products coming from the step b) that, due to their own nature, require a thickening agent for becoming amalgamated.

3. A process according to anyone of the preceding claims, characterized in that during the packaging step d), in the case of mixtures of freeze-dried and/or dried products, the seasoning powders are added as such and/or in the form of dried powders, but anyway with a water activity less than or equal to 0.3.

4. A process according to anyone of the preceding claims, characterized in that the dampening step b) is carried out through nebulization.

5. A process according to anyone of the preceding claims, characterized in that the dampening step b) is carried out employing a water/alcohol mixture in proportions variable between 1% water-99% and 99% water-1% alcohol.

6. A process according to claim 6, characterized in that the step b) is carried out employing a solution comprising 20-30% water and 70-80% alcohol.

7. A process according to anyone of the preceding claims, characterized in that said step b) is performed employing just ethyl alcohol or a water solution of the same.

8. A process according to anyone of the preceding claims 1-3, characterized in that step b) is performed by keeping the produce at a temperature between 20°C and 95°C for a time between 1 second and 10 minutes.

9. A process according to anyone of the preceding claims 1-8, characterized in that maltodextrin is employed as a thickening agent in said step b1).

10. A process according to claim 9, characterized in that said step b1) is performed employing a 1/1/1.6 water/alchol/maltodextrin solution.

11. A process according to anyone of the preceding claims 1-8, characterized in that a glucose syrup is employed as the thickening agent in said step b1).

12. A process according to anyone of the preceding claims 1-11, characterized in that ethyl alcohol is employed, as such or as a water solution in addition to the thickening agent in said step b1).

13. A process according to anyone of the preceding claims, characterized in that the packaging step d) is carried out employing composite plastic materials containing an EVOH or a PVDC or an aluminium layer.

**Patentansprüche**

1. Verfahren zur Herstellung von dehydrierten gepraessten Nahrungsmitteln aus gefriegetrockneten und/oder getrockneten Produkten tierischer oder pflanzlicher Herkunft, das folgende Verfahrensschritte hat:
   a) Dosieren der gefriergetrockneten und/oder getrockneten Produkte tierischer oder pflanzlicher Herkunft in Dosen, die zur Erhaltung des Endprodukts notwendig sind;
   b) Plastisieren der Anfangsprodukte durch eine waessrige Alkoholloesung oder das Reinalkohol und/oder durch Stehenlassen derselben bei einer Temperatur zwischen 20°C und 95°C fuer eine Zeitdauer von 1 Sekunde bis 10 Minuten bis zur Erreichung der gewuenschten Plastizitaet;
   b1) Zugabe einer nahrungsmittelartigen Verdichtungsverbindung, aufgeloest in einer waessrigen Alkoholloesung oder im Reinalkohol, in einer solchen Menge, dass das Gewicht der Loesung einen Anteil von 1 bis 6% des Endproduktes betraegt;
   c) Pressen des bzw. der Produkt (e) mit einem Druck von 2 bis 100 kg/cm$^2$ bei einer Temperatur zwischen 20°C und 95°C fuer eine Zeidauer von 1 bis 10 Sek und
   d) Verpackung des erhaltenen Produktes mit Anwendung eines hochisolierenden Stoffes;
   wobei das Endprodukt einen Wasser-Aktivitaetwert (WA) niedriger als oder gleich 0,4-0,5 aufweisen soll.

2. Verfahren nach Anspruch 1, dadurch gekennzeichnet, dass bei einem gefriergetrockenen und getrockenen Produkt pflanzlicher Herkunft und/oder tierischer Herkunft, der Plastisierungsschritt b) nur an der gefriergetrockenen Produkten durchgefuehrt wird, waehrend die getrockenen Produkte unmittelbar an den Verfahrensschritt b1) zugefuehrt werden, bei dem das Verdickungsmittel zugegeben wird, wobei sie mit einem Anteil der gefriergetrockenen Produkte aus dem Verfahrensschritt b) vermischt werden, die wegen deren Eigenbeschaffenheit zur deren Amalgamierung ein Verdickungsmittel benoetigen.

3. Verfahren nach je einem der vorhergehenden Ansprueche, dadurch gekennzeichnet, dass waehrend des Verpackungsschrittes d), im Falle von Mischungen aus gefriergetrockenen und getrockenen Produkten, diesen Konditioniermittel in Form von trockenen Pulvern zugeben werden, aber immer mit einer Wasser-Aktivitaet kleiner als oder gleich 0,3.

4. Verfahren nach je einem der vorhergenden Ansprueche, dadurch gekennzeichnet, dass der Plastisietungsschritt b) Verneblung durchgefuehrt wird.

**5.** Verfahren nach je einem der vorhergenden Ansprueche, dadurch gekennzeichnet, dass der Plastisierungsschritt b) durch Anwendung eines Wasser- und Alkohol-Mischung in einem zwischen 1% Wasser - 99% Alkohol und 99% Wasser - 1% Alkohol veraenderlichen Verhaeltnis durchgefuehrt wird.

**6.** Verfahren nach je einem der vorhergenden Ansprueche, dadurch gekennzeichnet, dass der Verfahrenschritt b) durch Anwendung einer 20 bis 30% Wasser und 70 bis 80% Alkohol enthaltenden Loesung durchgefuehrt wird.

**7.** Verfahren nach je einem der vorhergenden Ansprueche, dadurch gekennzeichnet, dass der Verfahrenschritt b) durch Anwendung von Rein-Aethylalkohol oder einer waessrigen Loesung desselben durchgefuehrt wird.

**8.** Verfahren nach je einem der vorhergenden Ansprueche, dadurch gekennzeichnet, dass der Verfahrenschritt b) bei einer Temperatur zwischen 20°C und 95°C fuer eine Zeitdauer zwischen 1 Sekunde und 10 Minuten durchgefuehrt wird.

**9.** Verfahren nach je einem der vorhergenden Ansprueche, dadurch gekennzeichnet, dass im Verfahrenschritt b1) als Verdickungsmittel Maltodextrin gebraucht wird.

**10.** Verfahren nach Anspruch 9 dadurch gekennzeichnet, dass der Verfahrenschritt b1) durch Anwendung einer Loesung von Wasser/Alkohol/Maltodextrin im Verhaeltnis von 1/1/1,6 durchgefuehrt wird.

**11.** Verfahren nach je einem der vorhergehenden Ansprueche 1 bis 11, dadurch gekennzeichnet, dass im Verfahrenschritt b1) als Verdichtungsmittel ein Glycose-Sirup gebraucht wird.

**12.** Verfahren nach je einem der vorhergehenden Ansprueche 1 bis 11, dadurch gekennzeichnet, dass im Verfahrenschritt b1) zum Verdichtungsmittel der Aethylalkohol als solcher oder als eine Wasserloesung desselben zugegeben wird.

**13.** Verfahren nach je einem der vorhergehenden Ansprueche, dadurch gekennzeichnet, dass der Verpak-kungsschritt d) durch Anwendung eines ein EVOH oder ein PVDC oder eine Aluminiumschicht enthaltenden Verbund-Kunststoffes durchgefuehrt wird.

**Revendications**

**1.** Procédé de préparation d'alimentes deshydratés compressés à partir de produits d'origine animals ou végétale secs ou lyophilizés, ledit procéde comprenant les phases de:
a) dosage des products d'origine végétale ou animale lyophilisés en doses nécessaires pour obtenir le product fini desiré;
b) plastification des produits de départ au moyen d'une solution d'eau et d'alcool ou au moyen d'un alcool pur et/ou maintenant les mêmes à une température entre 20°C et 95°C pendant un intervalle de temps compris entre 1 seconde et 10 minutes au point d'en obtenir la plasticité desirée;
b1) adjonction d'un composé d'épaississement de type de produit alimentaire, dissoudré dans une solution d'eau et d'alcool ou dans l'alcool pur, en quantité necessaire pour obtenir une solution formante 1 à 6% du produit fini;
c) compression du ou des produit (s) à une pression entre 2 et 100 kg/cm à une température entre 1 et 10 seconds et
d) emballage du produit ainsi obtenu en employant un matériel de forte barrière;
le produit fini devant avoir un valeur d'activité d'eau inférieur ou égal à 0,4-0,5.

**2.** Procédé selon la revendication 1, caractérisé en ce que dans le cas des produits lyophilisés ou secs d'origine animale ou végétale, la phase b) est réalisée seulement sur les produits lyophilisés, tandis que les produits secs sont transportés directement à la phase b1), dans laquelle est ajonté l'agent d'épaississement et pendant laquelle ils sont melangés avec une partie des produits lyophilisés venant de la phase b), qui à cause de leur nature propre nécessitent d'un agent d'épaissessement pour être amalgamés.

3. Procédé selon une quelconque des revendications précédantes, caracterisé en ce que pendant la phase d'emballage d) dans le cas des mélanges des produits lyophilisés et secs, les poudres de maturation sont ajontées comme telles et/ou en forme des poudres sèches, mais en tout cas avec une activité d'eau inférieure ou égal à 0,3.

4. Procédé selon une quelconque des revendications précédantes, caracterisé en ce que la phase de plastification b) est réalisée par nébulisation;

5. Procédé selon une quelconque des revendications précédantes, caracterisé en ce que la phase de plastification b) est réalisée en employant une mélange d'eau et d'alcool en proportions variables entre 1% d'eau et 99% d'alcool et 99% d'eau et 1% d'alcool.

6. Procédé selon la revendication 6, caractérisé en ce que la phase b) est réalisée en employant un solution comprenant 20-30% d'eau et 70-80% d'alcool.

7. Procédé selon une quelconque des revendications précédentes, caractérisée en ce que ladite phase b) est réalisée en employant l'alcool éthylique pur ou une solution acqueuse du même.

8. Procédé selon les revendications 1-3, caractérisé en ce que la phase b) est réalisée en maintenant le produit à une température entre 20°C et 95°C pour un temps entre 1 seconde et 10 minutes.

9. Procédé selon les revendications 1-8, caractérisé en ce que dans ladite phase b1) maltodextrin est employée comme agent d'épaissessement.

10. Procédé selon la revendication 9, caracterisé en ce que ladite phase b1) est réalisée en eployant une solution d'eau, d'alcool et de maltodextrin en rapport de 1 à 1 à 1,6.

11. Procédé selon une quelconque des revendications précédentes 1 à 8, caractérisé en ce que dans ladite phase b1) un sirop de glucose est employé comme agant d'épaississement.

12. Procédé selon une quelconque des revendications précédentes, caractérisé en ce que dans la phase b1) l'alcool éthylique est employé comme tel ou comme une solution acqueuse en addition à l'agent d'épaississement.

13. Procédé selon une quelconque des revendications précédentes, caractérisé en ce que la phase d'emballage d) est réalisée en employant matériels hétéroclites containants un EVOH ou un PVDC ou une couche d'aluminium.